Europäisches Patentamt

European Patent Office

Office européen des brevets

(19)

(11) Numéro de publication : **0 489 699 A1**

(12) **DEMANDE DE BREVET EUROPEEN**

(21) Numéro de dépôt : **91830536.8**

(22) Date de dépôt : **04.12.91**

(51) Int. Cl.⁵ : **F01N 3/02**, F01N 3/28

(30) Priorité : **05.12.90 IT 64390**

(43) Date de publication de la demande :
**10.06.92 Bulletin 92/24**

(84) Etats contractants désignés :
**AT BE CH DE DK ES FR GB GR LI LU NL SE**

(71) Demandeur : **Amadio, Filippo**
**Via Colle Cervinara, 5**
**I-63040 Folignano (AP) (IT)**

(72) Inventeur : **Amadio, Filippo**
**Via Colle Cervinara, 5**
**I-63040 Folignano (AP) (IT)**

(74) Mandataire : **Baldi, Claudio**
**Piazza Ghislieri, 3**
**I-60035 Jesi (Ancona) (IT)**

(54) **Pot d'échappement catalytique équipé d'un filtre électrostatique externe pour le filtrage des gaz d'échappement.**

(57)  La présente demande de brevet pour invention est un pot d'échappement catalytique équipé à l'entrée, d'un filtre électrostatique de manière à intercepter et retenir les parcelles solides présentes dans les gaz d'échappement, avant que celles-ci ne puissent pénétrer à l'intérieur du pot d'échappement même.

EP 0 489 699 A1

Jouve, 18, rue Saint-Denis, 75001 PARIS

La présente demande de brevet pour invention est un pot d'échappement catalytique pour véhicules à moteur à explosion, équipé, à l'entrée, d'un filtre électrostatique préposé à empêcher aux parcelles solides présentes dans les gaz d'échappement de pénétrer à l'intérieur du pot d'échappement et de se déposer sur le catalyseur présent à l'interne du ledit pot d'échappement. Ce dispositif a été conçu pour prolonger la durée opérationnelle des pots d'échappement catalytiques et d'en améliorer leur utilisation et entretien.

Il est connu que l'on applique les pots d'échappement catalytiques aux véhicules afin de réélaborer les dangereux et polluants gaz de décharge émis par les moteurs; en effet, les susdits pots d'échappement catalytiques sont en mesure de transformer les produits toxiques contenus dans les gaz d'échappement en gaz inoffensifs.

Plus particulièrement, les pots d'échappement catalytiques modernes du type trifonctionnel (ou convertisseurs) sont en mesure de transformer le monoxyde de carbone en bioxyde de carbone, les hydrocarbures non brûlés en bioxyde de carbone et eau, ainsi que les oxydes d'azote en azote et eau.

Cette transformation est possible parce que les susdits pots d'échappement catalytiques sont équipés à leur interne de supports monolithiques cylindriques en céramique, réalisés en nid d'abeille et revêtus d'une couche intermédiaire poreuse en aluminium et terres rares; cette configuration permet à ces monolithes d'absoudre convenablement la fonction de catalyseurs.

Mais s'il faut dépurer des gaz d'échappement de moteurs diesel qui contiennent principalement des parcelles solides de carbone, il faut monter à l'interne du pot d'échappement catalytique - outre les susdits éléments catalyseurs - des ultérieurs éléments filtrants prévus à cet effet afin de retenir les susdites parcelles solides.

En effet, sans les susdits ultérieurs filtres, les parcelles solides se déposeraient sur les centres actifs du catalyseur, en l'empoisonnant et en formant une couche de séparation entre celui-ci et les ultérieurs résidus de la combustion; ceci, pratiquement, réduirait sensiblement non seulement les fonctions du pot d'échappement mais aussi sa durée opérationnelle.

Dans une première version de construction, ces filtres sont actuellement réalisés avec une forme et une structure superficielles semblables à celles des susdits monolithes catalyseurs; toutefois ils présentent des différences avec ceux-ci vu qu'ils sont équipés à leur surface de pores passants et les cellules du nid d'abeille sont fermées alternativement.

Ces filtres peuvent dépurer de manière adéquate les gaz d'échappement de moteurs diesel même si leur durée varie selon les conditions opérationnelles du moteur; lesdites conditions déterminant tôt ou tard leur engorgement. Il faut aussi préciser que les susdits filtres peuvent être régénérés en les démontant et en les introduisant dans un four en mesure de déterminer la combustion des parcelles solides de carbone qu'y si étaient déposées.

Toutefois, la nécessité d'accomplir cette opération d'entretien détermine une significative série d'inconvénients à charge de ce type conventionnel de filtres pour pots d'échappement catalytiques.

Ce ci-dessus non seulement parce que les usagers sont obligés à de fréquentes et onéreuses opérations d'entretien du pot d'échappement, mais aussi parce que les fabricants de ce type de pots d'échappement catalytiques sont obligés à conférer à leurs réalisations une structure plutôt sophistiquée et complexe et qui doit aussi prévoir la possibilité d'un rapide démontage des filtres.

Il faut aussi préciser que la susdite opération de régénération doit être pratiquée dans des fours prédisposés à cet effet, lesdits fours étant, à cause de leur agencement, de leur entretien et de leur fonctionnement, un investissement assez onéreux; de plus, cet entretien n'est pas toujours en mesure de rétablir le filtre à son parfait état opérationnel original.

Ceci est la conséquence des cendres qui résultent de la combustion, lesdites cendres restant insinuées dans les pores du matériel spongieux dans lequel le filtre même est réalisé; ceci limitant donc sensiblement les capacités fonctionnelles du filtre.

Il faut aussi remarquer que pendant la régénération le filtre est soumis à des températures très élevées; ceci déterminant facilement l'écaillement progressif de l'enveloppe spongieuse dont il est équipé et par conséquent en raccourcissant inévitablement la durée opérationnelle. En alternative à ce type de filtre à monter dans les pots d'échappement catalytiques, d'autres éléments filtrants ont été réalisés; ces autres éléments filtrants étant constitués pour l'assemblage de tubes cylindriques en composé spongieux de céramique, étant les susdits tubes bouchés à l'intérieur d'une de leurs extrémités, de manière à ce que le gaz doit migrer de l'externe à l'interne du ledit tube, en provoquant ainsi la dépuration des substances de carbone solides qui, pendant cette migration des gaz, se déposent sur les pores externes de la paroi du tube.

Les susdits éléments filtrants doivent eux aussi subir périodiquement une régénération, celle-ci dans ce cas devant être effectuée en injectant de l'air et de l'essence en présence de plusieurs bougies qui donnent le départ à la combustion; ceci provoquant donc la combustion des substances de carbone présentes à l'externe de chaque tube; il faut remarquer que cette technique de régénération présente elle aussi les mêmes inconvénients déjà mis en évidence à propos des autres filtres ci-dessus illustrés, avec de plus la coûteuse nécessité de devoir utiliser de l'essence en tant que combustible.

Vu les inconvénients pratiques et fonctionnels qui dérivent du fait de prévoir des filtres directement à l'intérieur des actuels pots d'échappement catalytiques, on a réalisé le pot d'échappement selon l'idée qui est caractérisé en ce que - par rapport à tous les dispositifs antérieurs - il est équipé d'un filtre électrostatique monté directement à son entrée; par conséquent, les gaz d'échappement peuvent donc être libérés de leurs parcelles solides avant de pénétrer dans le pot d'échappement et d'en traverser le catalyseur.

Grâce à ce filtre, en effet, les parcelles solides en suspension dans les gaz d'échappement sont exposées à un gaz ionisé dans un champ électrique, de manière à être ainsi chargées électriquement et par conséquent de migrer sous l'action du champ même.

Plus particulièrement, quand la ionisation du gaz a été effectuée, il se détermine avant tout l'extirpation des dangereuse parcelles polluantes suite à la production d'un champ électrique; lesdites parcelles s'accumulant sur une surface prévue à cet effet et sur laquelle elles sont retenues de manière adéquate afin d'en éviter la dispersion désordonnée.

Naturellement cette surface devra être périodiquement nettoyée afin d'enlever toutes les parcelles solides qui s'y sont déposées.

On peut effectuer cette précipitation électrique en suivant deux classes générales:
  – en un seul stade pendant lequel la ionisation et l'accumulation des parcelles sont combinées et s'effectuent simultanément;
  – en deux stades pendant lesquels la ionisation s'effectue dans une première zone du filtre et successivement les parcelles solides se déposent dans une deuxième chambre.

On précise que le filtre électrostatique en objet a été conçu de manière à pouvoir aussi fonctionner en tant que chambre d'expansion, et donc de silencieux, afin de limiter le bruit du moteur.

Il faut aussi signaler que ce filtre résulte particulièrement pratique et efficace non seulement en ce qui concerne son fonctionnement mais aussi son entretien, surtout si on l'équipe d'un pressostat qui, après avoir détecté la continuelle accumulation de parcelles solides qui ont engorgé les électrodes, envoie un signal à un détecteur monté sur le tableau de bord du véhicule, de manière à ce que l'usager vérifie la saturation du filtre et la nécessité de le décharger des parcelles qui s'y sont accumulées.

A ce propos, il faut signaler que ledit filtre pourrait être réalisé en forme de tiroir avec lamelles horizontales accessibles par une petite porte par laquelle lesdites lamelles peuvent être retirées pour les nettoyer en les aspirant ou en les brossant.

En alternative, on peut prévoir un filtre à lamelles-électrodes verticales fixes et renfermées dans une enveloppe externe parallélépipède ayant la plaque de base qui crée une double descente raccordée au centre qui supporte une vis longue comme le filtre.

Ce dispositif étant mis en fonction par son propre petit moteur électrique, monté sur un côté du filtre, tandis que de l'autre côté on a prévu une petite porte escamotable; un dispositif vibrant étant prévu sur la partie supérieure du filtre.

Dans cette solution, il est prévu que pour vider le filtre il faut premièrement ouvrir la susdite petite porte et ensuite inverser la polarité des électrodes en mettant simultanément en fonction le petit moteur de la vis et du vibrateur; ce dispositif provoque d'énergiques secousses qui ont l'effet de faire tomber sur le fond du filtre les parcelles qui se sont déposées sur les électrodes; la vis étant prévue pour leur enlèvement et les poussant à l'externe à travers l'ouverture restée ouverte pour enlever la petite porte.

On souligne que les susdites secousses sont provoquées par deux tubes flexibles prévus à l'interne et à l'externe du dispositif en objet.

Une troisième forme de réalisation du filtre prévoit le montage de lamelles verticales ou horizontales; dans ce cas le nettoyage de l'enveloppe filtrante peut s'effectuer au moyen de jets d'air comprimé dirigés directement sur les lamelles; une ouverture étant prévue dans ce cas directement sur le carter du filtre, sur le côté opposé à celui d'où proviennent les jets d'air comprimé.

Pour finir, on signale que les parcelles solides détachées d'un filtre monté sur le pot d'échappement selon l'idée peuvent être avantageusement utilisées en tant que combustible solide.

**Revendications**

**1)** Pot d'échappement catalytique équipé d'un filtre électrostatique externe pour le filtrage des gaz d'échappement, caractérisé en ce que le susdit filtre électrostatique est monté en correspondance de l'entrée du pot d'échappement de manière à intercepter et retenir les parcelles solides présentes dans les gaz d'échappement, avant que celles-ci ne puissent pénétrer à l'intérieur du pot d'échappement même.

Office européen
des brevets

# RAPPORT DE RECHERCHE EUROPEENNE

Numero de la demande

EP    91 83 0536

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | DE-A-2 139 775 (VARTA)<br>* le document en entier *<br>--- | 1 | F01N3/02<br>F01N3/28 |
| A | FR-A-2 515 258 (DAIMLER-BENZ)<br>* page 1, ligne 24 - page 3, ligne 5 *<br>--- | 1 | |
| A | DE-A-2 360 309 (KURTSIEFER)<br><br>----- | | |

DOMAINES TECHNIQUES
RECHERCHES (Int. Cl.5 )

F01N

Le présent rapport a été établi pour toutes les revendications

| Lieu de la recherche | Date d'achèvement de la recherche | Examinateur |
|---|---|---|
| LA HAYE | 25 FEVRIER 1992 | SIDERIS MARIOS |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................
& : membre de la même famille, document correspondant

EPO FORM 1503 03.82 (P0402)